# EUROPÄISCHE PATENTSCHRIFT

(11) **EP 2 645 125 B1**
(45) Veröffentlichungstag und Bekanntmachung des Hinweises auf die Patenterteilung: **10.05.2017**
(21) Anmeldenummer: 12161475.4
(22) Anmeldetag: 27.03.2012
(51) Int. Cl.: G01S 17/89, G01S 17/36, G01S 17/42, G01S 7/48, G01S 7/486, G01S 7/481

(54) **Laserscanner und Verfahren zur Erfassung von Objekten in einem Überwachungsbereich**
Laser scanner and method for detecting objects in a surveillance area
Laser scanner et procédé destiné à la détection d'objets dans une zone de surveillance

(43) Veröffentlichungstag der Anmeldung: 02.10.2013
(73) Patentinhaber: Sick AG, 79183 Waldkirch (DE)
(72) Erfinder: Nübling, Ralf Ulrich, 79211 Denzlingen (DE); Jägel, Matthias, 79104 Freiburg (DE)
(74) Vertreter: Hehl, Ulrich

(56) Entgegenhaltungen:
- EP-A1- 1 890 168
- WO-A1-03/062744
- US-A1- 2010 253 931

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 14.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Durch den Spiegel ergeben sich sehr hohe Anforderungen an die Ausrichtung der Lichtsender und Lichtempfänger zur Drehachse. Abweichungen davon führen zu einer verbogenen Überwachungsebene. Außerdem sind solche Optikeinheiten baugroß, weil sich immer ein Teil der Objektweite über den Spiegel bis zur Empfangsoptik in das Gerät erstreckt. Streulichteffekte an der Frontscheibe durch die Frontscheibe selbst oder deren Verunreinigung führen zu einer Beeinträchtigung der Sensorfunktion.

Es ist auch bekannt, den Drehspiegel dadurch zu ersetzen, dass der gesamte Messkopf mit Lichtsender und Lichtempfänger rotiert. Ein solcher Scanner wird in der DE 197 57 849 B4 offenbart. In der EP 2 388 619 A1 ist ebenfalls eine drehbare Sende-/Empfangseinheit vorgesehen. Sie wird beispielsweise nach dem Transformationsprinzip von den drehfesten Bereichen des Sensors mit Energie versorgt, während die Datenübertragung drahtlos per Funk oder auf optischem Wege erfolgt. Derartige Schnittstellen sind aber relativ aufwändig.

Die EP 2 375 266 A1 beschreibt einen weiteren Laserscanner, wobei hier die Empfangsoptik mitdrehend ausgebildet ist. Damit sich die Lichtwege im Sende- und Empfangspfad nicht stören, wird der Sendelichtstrahl außeraxial eingekoppelt. Das führt zu einer Taumelbewegung des Lichtflecks auf dem Lichtempfänger während der Drehbewegung.

In der EP 1 503 221 A1 wird ein Hohlwellenantrieb eingesetzt, um die Empfangseinheit eines Laserscanners zu drehen. Dabei wird aber zugleich ein sehr aufwändiger, durch mehrere Spiegel gefalteter Sendepfad erforderlich.

In der WO 2005/050129 A2 ist ein zentrales, im Querschnitt dachförmiges Spiegelsystem für die Abtastbewegung verantwortlich. Das Licht wird seitlich ein- und ausgekoppelt, wobei die Zuführung durch Lichtleiter erfolgt. Effektiv handelt es sich damit um eine klassische Lösung mit Drehspiegel.

Aus der WO 03/062744 A1 ist ein laserbasiertes Koordinatenmesssystem mit einem stationären Teil und einem drehbaren Teil bekannt. Der stationäre Teil umfasst eine Laserlichtquelle und einen optischen Detektor. Ein Lichtleiter bindet die Laserlichtquelle an den rotierbaren Teil an.

Die US 2010/0253931 A1 offenbart ein weiteres Koordinatenmesssystem mit einer Basiseinheit und einer drehbaren Trägeranordnung. Eine Laserlichtquelle dreht sich nicht mit der Trägeranordnung mit, sondern das Laserlicht wird über einen Lichtleiter zugeführt.

Die EP 1 890 168 A1 beschreibt einen weiteren Laserscanner. Die erfinderische Lösung basiert auf der Auslegung des Laserscanners mit einem möglichst einfach und klein aufgebauten, um zwei orthogonale Achsen beweglichen optischen Drehkörpers, der abgeschlossen und ohne elektrische Drehdurchführungen ausgebildet werden kann. Die Laserquelle, der Laser-Detektor und die Auswertungselektronik werden außerhalb des optischen Drehkörpers in einem Rotor untergebracht, der um die im wesentlichen vertikale Achse dreht. Das von der Laserquelle stammende Laserlicht gelangt über die Spiegel und den zentralen Bereich der Optik auf einen Objektbereich. Das Sendelicht wird beispielsweise über zwei Spiegel und eine einfache Kollimationsoptik zentral aus dem Messkopf geführt. Das zurück gestreute Laserlicht gelangt durch den radial äußeren Bereich der Optik und zwei Spiegel in einen Lichtleiter, der zum optischen Austrittslink zwischen Drehkörper und Rotor führt.

Daher ist Aufgabe der Erfindung, die periodische Abtastung in einem gattungsgemäßen Sensor zu verbessern.

Diese Aufgabe wird durch einen optoelektronischen Sensor und ein Verfahren zur Erfassung von Objekten in einem Überwachungsbereich nach Anspruch 1 beziehungsweise 14 gelöst. Dabei geht die Erfindung von dem Grundgedanken aus, den üblichen Drehspiegel durch Lichtleiter zu ersetzen. Damit sind insbesondere optische Fasern gemeint, in denen das Licht zwischen einem Ende für den Lichteintritt und einem Ende für den Lichtaustritt durch optische Totalreflexionen praktisch verlustfrei auf dem durch den Lichtleiter vorgegebenen Pfad geführt wird. Wie üblich wird von dem Sensor ein Sendelichtstrahl ausgesandt und periodisch abgelenkt, aber nicht durch einen Drehspiegel, sondern einen Sendelichtleiter, beziehungsweise das remittierte Licht wird mit einem Empfangslichtleiter auf den Lichtempfänger geführt. Die Lichtleiter drehen sich mit einer rotierenden Optikeinheit mit.

Die Erfindung hat den Vorteil, dass ein hohes Verhältnis von optischer Nutzfläche zu Restfunktionen und damit eine geringe Baugröße erreicht werden kann. Die Toleranzen bei der Justierung der verschiedenen optischen Elemente sind wesentlich größer, weil keine Spiegeloptik eingesetzt wird. Da der optische Weg zwischen Frontscheibe und Optikeinheit extrem kurz gehalten werden kann, reagiert ein erfindungsgemäßer Sensor unkritisch auf Streulicht, insbesondere Frontscheibenreflexe und Verunreinigungen der Frontscheibe. Der Scanner kann bei großen Öffnungswinkeln einen Überwachungsbereich über bis zu 360° erfassen.

Der Lichtsender ist bevorzugt auf der Drehachse angeordnet. Auch der Lichtempfänger ist bevorzugt auf der Drehachse angeordnet. Dadurch können Lichtsender beziehungsweise Lichtempfänger im Gegensatz zu der rotierenden Optikeinheit fix bleiben. Insbesondere fällt die optische Achse von Lichtsender beziehungsweise Lichtempfänger mit der Drehachse zusammen, so dass sich eine symmetrische Anordnung ergibt. Besonders bevorzugt ist eine Anordnung, bei der Lichtsender und Lichtempfänger einander gegenüberliegend angeordnet sind, die Optikeinheit also sozusagen auf der von der Drehachse gebildeten Sichtlinie vom Lichtsender zum Lichtempfänger liegt.

Die Optikeinheit weist bevorzugt eine Empfangsoptik auf, welche das remittiere Licht in den Empfangslichtleiter bündelt. Als Teil der Optikeinheit vollzieht auch diese Empfangsoptik die Drehbewegung mit. Dadurch kann der notwendige Lichtweg zwischen Empfangsoptik und Lichtempfänger vorverlagert und so eine besonders geringe Baugröße erreicht werden.

Vorzugsweise ist eine Sendeoptik in die Empfangsoptik integriert. Die Sendeoptik ist üblicherweise wesentlich kleiner als die Empfangsoptik, da sie nur eine bekannte im Wesentlichen punktförmige Lichtquelle kollimiert. Dadurch ist eine solche Integration mit geringem Bauraum- und Justagebedarf möglich.

Die Sendeoptik ist vorzugsweise als Sendelinse im Zentrum der Empfangsoptik ausgebildet. Dabei ist auch die Empfangsoptik bevorzugt eine Linse. Mit einer konzentrischen Doppellinse ist dann eine kompakte mitdrehende Sende-/Empfangsoptik geschaffen. Alternativ ist auch eine biaxiale Anordnung denkbar, insbesondere mit einer Doppellinse, die nebeneinander angeordnete Empfangs- und Sendelinsen aufweist.

Ein Ende des Sendelichtleiters ist vorzugsweise in der Nähe einer Sendeoptik angeordnet. Aus diesem Ende tritt das Sendelicht aus. Dadurch wird Streulicht in dem Sensor vermieden. Wenn in einer bevorzugten Ausführungsform die Sendeoptik in die Empfangsoptik integriert ist, kann der Sendelichtleiter sogar ein Stückchen in die üblicherweise größere Empfangsoptik hineingeführt werden, um optisches Übersprechen in den Empfangspfad noch weiter zu unterdrücken. Ein Ende des Empfangslichtleiters, in welches das remittierte Licht gebündelt wird, befindet sich vorzugsweise auf gleicher Höhe wie das Ende des Sendelichtleiters, aber in einem im Rahmen der Dimensionen der Optikeinheit möglichen großen Abstand. Der Eintrittsbereich des Empfangslichtleiters ist also über die Drehachse hinaus von der Empfangsoptik beabstandet, bis hin zu einer Position nahe dem der Empfangsoptik gegenüberliegenden Randbereich der Optikeinheit 30. Dadurch wird genug Raum gegeben, um das remittierte Licht zu fokussieren. Der kleine Teilbereich, der durch den Sendelichtleiter verdeckt wird, ist dann vernachlässigbar.

Dem Lichtempfänger ist bevorzugt eine zusätzliche Empfangsoptik vorgeordnet. Diese zusätzliche Empfangsoptik ist statisch und ergänzt eine mitdrehende Empfangsoptik auf der Optikeinheit. Ganz analog ist auch dem Lichtsender bevorzugt eine zusätzliche Sendeoptik vorgeordnet.

Der Sendelichtleiter weist bevorzugt zwei Enden auf, die um 60 bis 90 °, insbesondere um etwa 90° gegeneinander verkippt sind. Damit erfüllt der Sendelichtleiter die Funktion als Umlenkeinheit für das Sendelicht. Mit einem Winkel von 90° wird ein parallel zur Drehachse ausgesandter Sendelichtstrahl in die senkrecht dazu orientierte Überwachungsebene umgelenkt. Kleinere Winkel wie beispielsweise 70° führen zu einem Überwachungsbereich, der durch einen Kegelmantel mit entsprechendem Öffnungswinkel und mit dem Sensor in dessen Spitze beschrieben ist. Dies kann in manchen Anwendungen vorteilhafter sein als eine Überwachungsebene. Analog weist auch der Empfangslichtleiter bevorzugt zwei Enden auf, die um 60° bis 90°, insbesondere um etwa 90° gegeneinander verkippt sind. Vorzugweise sind die Verkippungen von Sendelichtleiter und Empfangslichtleiter untereinander gleich. Beide Lichtleiter können zwischen den Enden auch nahezu beliebige Verformungen aufweisen. Meist wird ein kurzer Lichtleiter mit einem möglichst direkten Weg bevorzugt sein, aber für eine bessere Massenverteilung zur Vermeidung einer Unwucht in der Optikeinheit oder aus anderen Gründen sind auch längere Lichtleiter mit Umwegen denkbar.

Vorzugsweise ist ein Hohlwellenantrieb vorgesehen, um die Optikeinheit in Drehbewegung zu versetzen, wobei der Lichtsender oder der Lichtempfänger in einem Innenraum der Hohlwelle angeordnet ist. Dadurch ist es möglich, auch auf der dem Antrieb zugewandten Seite der Optikeinheit den Lichtsender oder den Lichtempfänger unmittelbar auf der Drehachse anzuordnen.

Die Auswertungseinheit ist bevorzugt dafür ausgebildet, eine Lichtlaufzeit zwischen Aussenden des Sendelichtstrahls und Empfang des remittierten Lichts und daraus einen Objektabstand zu berechnen. Zusätzlich kann auch eine Winkelmesseinheit vorgesehen sein, welche den Winkel bestimmt, in den jeweils der Sendelichtstrahl umgelenkt beziehungsweise aus dem remittiertes Licht empfangen wird.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die einzige Figur der Zeichnung zeigt in:

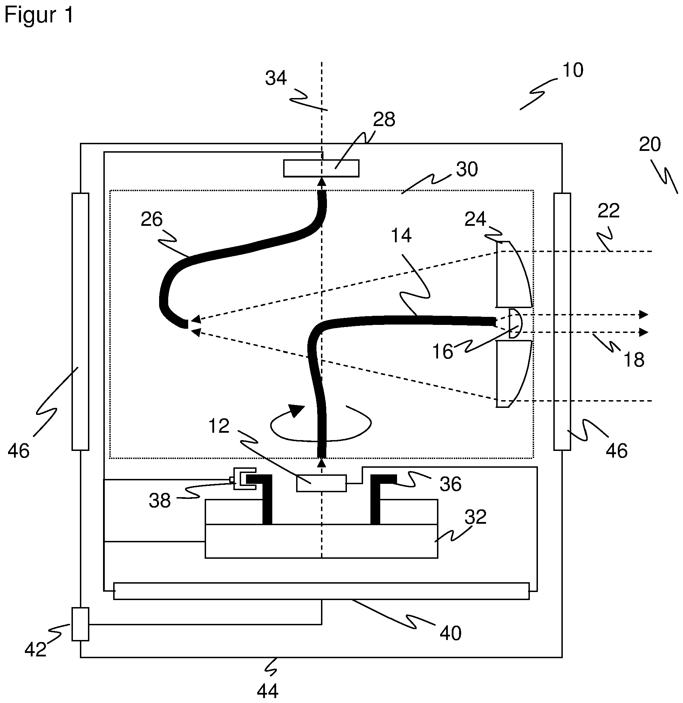

- Fig. 1: eine schematische Schnittdarstellung durch einen Laserscanner.

Fig. 1 zeigt eine schematische Schnittdarstellung durch einen optoelektronischen Sensor in einer Ausführungsform als Laserscanner 10. Ein Lichtsender 12, beispielsweise mit einer Laserlichtquelle, erzeugt Sendelicht, das in einen Sendelichtleiter 14 eintritt. Eine nicht dargestellte zusätzliche Sendeoptik kann zwischen dem Lichtsender 12 und dem Eintrittsbereich des Sendelichtleiters 14 vorgesehen sein, um das Sendelicht gezielt in den Sendelichtleiter 14 zu führen. Das Sendelicht tritt aus einem dem Eintrittsbereich gegenüberliegenden Ende aus dem Sendelichtleiter 14 wieder aus und wird dabei gegenüber der ursprünglichen Austrittsrichtung aus dem Lichtsender 12 um in diesem Beispiel 90° umgelenkt. Eine Sendeoptik 16 formt aus dem Sendelicht einen Sendelichtstrahl 18, der in eine Überwachungsebene 20 ausgesandt wird.

Nach Remission an einem in der Überwachungsebene vorhandenen Objekt gelangt remittiertes Licht 22 zu dem Laserscanner 10 zurück und wird von einer Empfangsoptik 24 auf den Eintrittsbereich eines Empfangslichtleiters 26 gebündelt. Das remittierte Licht 22 wird in dem Empfangslichtleiter 26 um 90° umgelenkt und fällt nach Austritt aus dem Empfangslichtleiter 26 auf einen Lichtempfänger 28, beispielsweise eine Photodiode. Wie schon sendeseitig kann auch zwischen dem Austritt aus dem Empfangslichtleiter 26 und dem Lichtempfänger 28 eine nicht dargestellte zusätzliche Empfangsoptik vorgesehen sein. Die Sendeoptik 16 ist in der dargestellten Ausführungsform beispielhaft in die Empfangsoptik 24 integriert. Dazu wird beispielsweise eine kleinere Sammellinse im Zentrum einer größeren Sammellinse untergebracht.

Sendelichtleiter 14, Sendeoptik 16, Empfangsoptik 24 und Empfangslichtleiter 26 sind Teil einer Optikeinheit 30, die von einem Motor 32 in eine kontinuierliche Drehbewegung um eine Drehachse 34 versetzt wird. Dadurch tastet der Sendelichtstrahl 18 während jeder vollständigen Umdrehung die Überwachungsebene 20 ab. Der Motor 32 ist in dem dargestellten Beispiel als Hohlwellenantrieb ausgebildet, damit der Lichtsender 12 kompakt im Inneren der Hohlwelle 36 untergebracht werden kann. Alternativ könnte in einer gespiegelten Anordnung auch der Lichtempfänger 28 in der Hohlwelle 36 vorgesehen sein. In beiden Fällen ist ermöglicht, Lichtsender 12 und Lichtempfänger 28 einander zugewandt auf der Drehachse 34 anzuordnen, vorzugsweise so, dass ihre optischen Achsen mit der Drehachse 34 zusammenfallen.

An einer der mitdrehenden Komponenten, in Figur 1 beispielhaft an der Hohlwelle 36, bestimmt eine Winkelmesseinheit 38 die jeweilige Winkelstellung der Optikeinheit 30. Die Winkelmesseinheit 38 kann beispielsweise von einer Strichscheibe als Winkelmaßverkörperung und einer Gabellichtschranke als Abtastung gebildet sein.

Eine Auswertungseinheit 40, die zugleich Steuerungsfunktionen des Laserscanners 10 übernimmt, ist mit dem Lichtsender 12, dem Lichtempfänger 28, dem Motor 32 und der Winkelmesseinheit 38 verbunden. Die Auswertungseinheit 40 bestimmt mit einem Lichtlaufzeitverfahren die Distanz zu einem angetasteten Objekt. Dazu wird in einem phasenbasierten System das Sendelicht des Lichtsenders 12 moduliert und eine Phasenbeziehung zu dem Empfangssignal des Lichtempfängers 28 ausgewertet. Alternativ werden in einem pulsbasierten System kurze Lichtpulse zu einem Sendezeitpunkt als Sendelicht ausgesandt und aus dem Empfangssignal deren Empfangszeitpunkt ermittelt.

Die jeweilige Winkelstellung, unter welcher der Sendelichtstrahl 18 jeweils ausgesandt wurde, ist der Auswertungseinheit 40 von der Winkelmesseinheit 38 ebenfalls bekannt. Somit stehen nach jeder Scanperiode über den Winkel und die Entfernung zweidimensionale Polarkoordinaten aller Objektpunkte in der Überwachungsebene 20 zur Verfügung. Durch eine zusätzliche periodische Verkippung der Drehachse 34 können auch dreidimensionale Raumbereiche erfasst werden.

Damit sind die Objektpositionen beziehungsweise Objektkonturen bekannt und können über eine Schnittstelle 42 ausgegeben werden. Die Schnittstelle 42 dient umgekehrt auch als Parametrierschnittstelle, über welche der Auswertungseinheit 40 Daten eingespielt werden können. Alternativ kann eine eigene Parametrierschnittstelle vorgesehen sein. Bei Anwendungen in der Sicherheitstechnik überwacht die Auswertungseinheit 40 Schutzfelder, die in der Überwachungsebene konfiguriert werden können, auf unzulässige Eingriffe und gibt gegebenenfalls ein sicherheitsgerichtetes Abschaltsignal über die dann sicher ausgebildete Schnittstelle 42 (OSSD, Output Signal Switching Device) aus.

Der Laserscanner 10 ist in einem Gehäuse 44 untergebracht, welches eine umlaufende Frontscheibe 46 aufweist. Da die Empfangsoptik 24 in der Optikeinheit 30 mitdrehend untergebracht ist, ist der Lichtweg zwischen Frontscheibe 46 und Empfangsoptik sehr klein, so dass Streulichteffekte insbesondere durch die Frontscheibe 46 selbst oder deren Verunreinigung wenig Auswirkungen haben.

Erfindungsgemäß ersetzen die mitdrehenden Lichtleiter 14, 26 den sonst in einem Laserscanner üblichen Drehspiegel. Der Verlauf der Lichtleiter 14, 26 kann variiert werden, weil die Lichtwege letztlich nur von den Eintritts- und Austrittsbereichen abhängen. Die Eintrittsbereiche können auf der Drehachse 34 und in Richtung der Drehachse 34 untergebracht werden, so dass die Übergänge zwischen Lichtsender 12 und Sendelichtleiter 14 beziehungsweise zwischen Empfangslichtleiter 26 und Lichtempfänger 28 von der Drehbewegung der Optikeinheit 30 nicht beeinflusst werden. Der Austrittsbereich des Sendelichtleiters 14 kann so nahe an die Sendeoptik 16 und sogar bis in die Empfangsoptik 24 hinein geführt werden, dass optisches Übersprechen effektiv unterdrückt wird. Der Eintrittsbereich des Empfangslichtleiters 26 kann der Empfangsoptik 24 gegenüberliegend in großem Abstand zu der Empfangsoptik 24 über die Drehachse 34 hinaus versetzt angeordnet werden. Der Empfangslichtleiter 26 kann so das von der Empfangsoptik 24 gebündelte remittierte Licht 22 wieder auf die Drehachse 34 zurückführen, so dass ein großer Lichtweg für das remittierte Licht 22 in der Optikeinheit 30 untergebracht werden kann, ohne die Baugröße zu beeinträchtigen.

## Patentansprüche

1. Laserscanner (10) zur Erfassung von Objekten in einem Überwachungsbereich (20) mit einem Lichtsender (12) zum Aussenden eines Sendelichtstrahls (18), einem Lichtempfänger (28) zum Erzeugen eines Empfangssignals aus dem von Objekten in dem Überwachungsbereich (20) remittierten Licht (22), einer um eine Drehachse (34) drehbaren Optikeinheit (30) zur periodischen Umlenkung des Sendelichtstrahls (18) in den Überwachungsbereich (20) und des remittierten Lichts (22) aus dem Überwachungsbereich (20), einem Motor (32), um die Optikeinheit (30) in eine kontinuierliche Drehbewegung zu versetzen, sowie einer Auswertungseinheit (40), in welcher anhand des Empfangssignals Informationen über Objekte in dem Überwachungsbereich (20) erfassbar sind, wobei die Optikeinheit (30) zwei Lichtleiter (14, 26) aufweist, nämlich einen mitdrehenden Sendelichtleiter (14), um den Sendelichtstrahl (18) von dem Lichtsender (12) in den Überwachungsbereich (20), und einen mitdrehenden Empfangslichtleiter (26), um das remittierte Licht (22) aus dem Überwachungsbereich (20) zu dem Lichtempfänger (28) umzulenken,
**dadurch gekennzeichnet,**
**dass** in dem Laserscanner (10) zwischen einem Austrittsbereich des Sendelichtleiters (14) und dem Überwachungsbereich (20) sowie zwischen dem Überwachungsbereich (20) und einem Eintrittsbereich des Empfangslichtleiters (26) keine Umlenkung erfolgt, die mitdrehenden Lichtleiter (14, 26) somit selbst die Funktion der Umlenkeinheit erfüllen und einen Drehspiegel ersetzen.

2. Laserscanner (10) nach Anspruch 1,
wobei der Lichtsender (12) auf der Drehachse (34) angeordnet ist, wobei insbesondere die optische Achse des Lichtsenders (12) mit der Drehachse (34) zusammenfällt.

3. Laserscanner (10) nach Anspruch 1 oder 2,
wobei der Lichtempfänger (28) auf der Drehachse (34) angeordnet ist, wobei insbesondere die optische Achse des Lichtempfängers (28) mit der Drehachse (34) zusammenfällt.

4. Laserscanner (10) nach einem der vorhergehenden Ansprüche,
wobei die Optikeinheit (30) eine Empfangsoptik (24) aufweist, welche das remittiere Licht (22) in den Empfangslichtleiter (26) bündelt.

5. Laserscanner (10) nach Anspruch 4,
wobei eine Sendeoptik (16) in die Empfangsoptik (24) integriert ist.

6. Laserscanner (10) nach Anspruch 5,
wobei die Sendeoptik (16) als Sendelinse im Zentrum der Empfangsoptik (24) ausgebildet ist.

7. Laserscanner (10) nach einem der vorhergehenden Ansprüche,
wobei ein Ende des Sendelichtleiters (14) in der Nähe einer Sendeoptik (16) angeordnet ist.

8. Laserscanner (10) nach einem der vorhergehenden Ansprüche,
wobei dem Lichtempfänger (28) eine zusätzliche Empfangsoptik (24) vorgeordnet ist.

9. Laserscanner (10) nach einem der vorhergehenden Ansprüche,
wobei dem Lichtsender (12) eine zusätzliche Sendeoptik (16) vorgeordnet ist.

10. Laserscanner (10) nach einem der vorhergehenden Ansprüche,
wobei der Sendelichtleiter (14) zwei Enden aufweist, die um 60° bis 90°, insbesondere um etwa 90° gegeneinander verkippt sind.

11. Laserscanner (10) nach einem der vorhergehenden Ansprüche,
wobei der Empfangslichtleiter (26) zwei Enden aufweist, die um 60° bis 90°, insbesondere um etwa 90° gegeneinander verkippt sind.

12. Laserscanner (10) nach einem der vorhergehenden Ansprüche,
wobei ein Hohlwellenantrieb (32) vorgesehen ist, um die Optikeinheit (30) in Drehbewegung zu versetzen, und wobei der Lichtsender (12) oder der Lichtempfänger (28) in einem Innenraum der Hohlwelle (36) angeordnet ist.

13. Laserscanner (10) nach einem der vorhergehenden Ansprüche,
wobei die Auswertungseinheit (40) dafür ausgebildet ist, eine Lichtlaufzeit zwischen Aussenden des Sendelichtstrahls (18) und Empfang des remittierten Lichts (22) und daraus einen Objektabstand zu berechnen.

14. Verfahren zur Erfassung von Objekten durch periodisches Abtasten eines Überwachungsbereichs (20), bei dem mit einem Lichtsender (12) ein Sendelichtstrahl (18) ausgesandt und an einer sich kontinuierlich um eine Drehachse (34) drehenden Optikeinheit (30) periodisch in den Überwachungsbereich (20) umgelenkt wird, wobei aus dem von Objekten in dem Überwachungsbereich (20) remittierten und periodisch an der Optikeinheit (30) zu einem Lichtempfänger (28) umgelenkten Licht ein Empfangsignal erzeugt wird, anhand dessen Informationen über Objekte in dem Überwachungsbereich (20) erfasst werden, wobei die Optikeinheit (30) zwei mitdrehende Lichtleiter (14, 26) aufweist, nämlich einen Sendelichtleiter (14) und einen Empfangslichtleiter (26), wobei der Sendelichtstrahl (18) in dem Sendelichtleiter (14) von dem Lichtsender (12) in den Überwachungsbereich (20) und das remittierte Licht (22) in dem Empfangslichtleiter (26) aus dem Überwachungsbereich (20) zu dem Lichtempfänger (28) umgelenkt wird,
**dadurch gekennzeichnet,**
**dass** zwischen einem Austrittsbereich des Sendelichtleiters (14) und dem Überwachungsbereich (20) sowie zwischen dem Überwachungsbereich (20) und einem Eintrittsbereich des Empfangslichtleiters (26) keine Umlenkung erfolgt, die mitdrehenden Lichtleiter (14, 26) somit selbst die Funktion der Umlenkeinheit erfüllen und einen Drehspiegel ersetzen.

15. Verfahren nach Anspruch 14,
wobei der Lichtsender (12) den Sendelichtstrahl (18) auf der Drehachse (34) aussendet, der Sendelichtleiter (14) den Sendelichtstrahl (18) um 60° bis 90°, insbesondere um etwa 90° in den Überwachungsbereich (20) umlenkt und der Empfangslichtleiter (26) das remittierte Licht (22) aus dem Überwachungsbereich (20) um 60° bis 90°, insbesondere um etwa 90° auf die Drehachse (34) in den Lichtempfänger (28) umlenkt.

## Claims

1. A laser scanner (10) for the detection of objects in a monitoring area (20), the laser scanner (10) comprising a light transmitter (12) for transmitting a transmission light beam (18), a light receiver (28) for generating a reception signal from remitted light (22) remitted by objects in the monitoring area (20), an optic unit (30) rotatable about an axis of rotation (34) for periodically deflecting the transmission light beam (18) into the monitoring area (20) and the remitted light (22) from the monitoring area (20), a motor (32) for moving the optic unit (30) in a continuous rotary movement, and an evaluation unit (40) wherein information about objects in the monitoring area (20) is detectable based on the reception signal, the optic unit (30) comprising two light guides (14, 26), namely, a co-rotating transmission light guide (14) for deflecting the transmission light beam (18) from the light transmitter (12) into the monitoring area (20) and a co-rotating reception light guide (26) for deflecting the remitted light (22) from the monitoring area (20) to the light receiver (28),
**characterized in that** there is no deflection in the laser scanner (10) between an exit region of the transmission light guide (14) and the monitoring area (20) as well as between the monitoring area (20) and an entry region of the reception light guide (26), so that the co-rotating light guides (14, 26) function as the deflection unit and replace a rotating mirror.

2. The laser scanner (10) according to claim 1,
wherein the light transmitter (12) is arranged on the axis of rotation (34), wherein in particular the optical axis of the light transmitter (12) coincides with the axis of rotation (34).

3. The laser scanner (10) according to claim 1 or 2,
wherein the light receiver (28) is arranged on the axis of rotation (34), wherein in particular the optical axis of the light receiver (28) coincides with the axis of rotation (34).

4. The laser scanner (10) according to any of the preceding claims,
wherein the optic unit (30) comprises reception optics (24) which focus the remitted light (22) into the reception light guide (26).

5. The laser scanner (10) according to claim 4,
wherein transmission optics (16) are integrated into the reception optics (24).

6. The laser scanner (10) according to claim 5,
wherein the transmission optics (16) are configured as a transmission lens in the center of the reception optics (24).

7. The laser scanner (10) according to any of the preceding claims,
wherein one end of the transmission light guide (14) is arranged in the vicinity of transmission optics (16).

8. The laser scanner (10) according to any of the preceding claims,
wherein additional reception optics (24) are arranged in front of the light receiver (28).

9. The laser scanner (10) according to any of the preceding claims,
wherein additional transmission optics (16) are arranged in front of the light transmitter (12).

10. The laser scanner (10) according to any of the preceding claims,
wherein the transmission light guide (14) has two ends which are tilted relative to one another by 60° to 90°, in particular by approximately 90 °.

11. The laser scanner (10) according to any of the preceding claims,
wherein the reception light guide (26) has two ends which are tilted relative to one another by 60 ° to 90 °, in particular by approximately 90 °.

12. The laser scanner (10) according to any of the preceding claims,
wherein a hollow shaft drive (32) is provided for moving the optic unit (30) in rotary movement, and wherein the light transmitter (12) or the light receiver (28) is arranged in an interior of the hollow shaft (36).

13. The laser scanner (10) according to any of the preceding claims,
wherein the evaluation unit (40) is configured to determine a light time of flight between transmission of the transmission light beam (18) and reception of the remitted light (22), and to calculate an object distance therefrom.

14. A method for the detection of objects by periodically scanning a monitoring area (20), wherein a transmission light beam (18) is transmitted by a light transmitter (12) and is periodically deflected in the monitoring area (20) by an optic unit (30) continually rotating about an axis of rotation (34), wherein a reception signal is generated from remitted light (22) remitted by objects in the monitoring area (20) and periodically deflected at the optic unit (30) to a light receiver (28), wherein information about objects in the monitoring area (20) is detected based on the reception signal, wherein the optic unit (30) comprises two co-rotating light guides (14, 16), namely, a transmission light guide (14) and a reception light guide (26), wherein the transmission light beam (18) is deflected in the transmission light guide (14) from the light transmitter (12) into the monitoring area (20) and the remitted light (22) is deflected in the reception light guide (26) from the monitoring area (20) to the light receiver (28),
**characterized in that** between an exit region of the transmission light guide (14) and the monitoring area (20) as well as between the monitoring area (20) and an entry region of the reception light guide (26) there is no deflection so that the co-rotating light guides (14, 16) function as the deflection unit and replace a rotating mirror.

15. The method of claim 14,
wherein the light transmitter (12) transmits the transmission light beam (18) along the axis of rotation (34), the transmission light guide (14) deflects the transmission light beam (18) into the monitoring area (20) by 60° to 90°, in particular by approximately 90°, and wherein the reception light guide (26) deflects the remitted light (22) from the monitoring area (20) by 60° to 90°, in particular by approximately 90°, onto the axis of rotation (34) into the light receiver (28).

## Revendications

1. Scanneur laser (10) destiné à détecter des objets dans une zone à surveiller (20), qui comprend un émetteur de lumière (12) pour émettre un rayon lumineux d'émission (18), un récepteur de lumière (28) pour générer un signal de réception à partir de la lumière (22) réémise par des objets dans la zone à surveiller (20), une unité optique (30) rotative autour d'un axe de rotation (34) et destinée à dévier périodiquement le rayon lumineux d'émission (18) vers la zone à surveiller (20) et la lumière réémise (22) depuis la zone à surveiller (20), un moteur (32) pour animer l'unité optique (30) d'un mouvement de rotation continu, ainsi qu'une unité d'évaluation (40) dans laquelle des informations relatives à des objets dans la zone à surveiller (20) peuvent être acquises à partir du signal de réception,
dans lequel l'unité optique (30) comprend deux guides de lumière (14,26) que sont un guide de lumière d'émission (14) tournant conjointement pour dévier le rayon lumineux d'émission (18) depuis l'émetteur de lumière (12) vers la zone à surveiller (20), et un guide de lumière de réception (26) tournant conjointement pour dévier la lumière réémise (22) depuis la zone à surveiller (20) vers le récepteur de lumière (28),
**caractérisé en ce que**
dans le scanneur laser (10), il n'y a pas de déviation entre une zone de sortie du guide de lumière d'émission (14) et la zone à surveiller (20) ainsi qu'entre la zone à surveiller (20) et une zone d'entrée du guide de lumière de réception (26), et les guides de lumière (14, 26) tournant conjointement remplissent donc eux-mêmes la fonction de l'unité de déviation et remplacent un miroir rotatif.

2. Scanneur laser (10) selon la revendication 1,
dans lequel l'émetteur de lumière (12) est agencé sur l'axe de rotation (34), et en particulier l'axe optique de l'émetteur de lumière (12) coïncide avec l'axe de rotation (34).

3. Scanneur laser (10) selon la revendication 1 ou 2,
dans lequel le récepteur de lumière (28) est agencé sur l'axe de rotation (34), et en particulier l'axe optique du récepteur de lumière (28) coïncide avec l'axe de rotation (34).

4. Scanneur laser (10) selon l'une des revendications précédentes,
dans lequel l'unité optique (30) comprend une optique de réception (24) qui concentre la lumière réémise (22) vers le guide de lumière de réception (26).

5. Scanneur laser (10) selon la revendication 4,
dans lequel une optique d'émission (16) est intégrée dans l'optique de réception (24).

6. Scanneur laser (10) selon la revendication 5,
dans lequel l'optique d'émission (16) est réalisée en tant que lentille d'émission au centre de l'optique de réception (24).

7. Scanneur laser (10) selon l'une des revendications précédentes,
dans lequel une extrémité du guide de lumière d'émission (14) est agencée à proximité d'une optique d'émission (16).

8. Scanneur laser (10) selon l'une des revendications précédentes,
dans lequel une optique de réception supplémentaire (24) est agencée en amont du récepteur de lumière (28).

9. Scanneur laser (10) selon l'une des revendications précédentes,
dans lequel une optique d'émission supplémentaire (16) est agencée en amont de l'émetteur de lumière (12).

10. Scanneur laser (10) selon l'une des revendications précédentes, dans lequel le guide de lumière d'émission (14) comprend deux extrémités qui sont basculées de 60° à 90°, en particulier d'environ 90° l'une par rapport à l'autre.

11. Scanneur laser (10) selon l'une des revendications précédentes, dans lequel le guide de lumière de réception (26) comprend deux extrémités qui sont basculées de 60° à 90°, en particulier d'environ 90° l'une par rapport à l'autre.

12. Scanneur laser (10) selon l'une des revendications précédentes, dans lequel est prévu un entraînement à arbre creux (32) pour animer l'unité optique (30) d'un mouvement de rotation, et l'émetteur de lumière (12) ou le récepteur de lumière (28) est agencé dans un volume intérieur de l'arbre creux (36).

13. Scanneur laser (10) selon l'une des revendications précédentes, dans lequel l'unité d'évaluation (40) est réalisée pour calculer un temps de parcours de lumière entre l'émission du rayon lumineux d'émission (18) et la réception de la lumière réémise (22) et pour calculer ainsi une distance à l'objet.

14. Procédé pour détecter des objets par balayage périodique d'une zone à surveiller (20), dans lequel un rayon lumineux d'émission (18) est émis par un émetteur de lumière (12) et est dévié périodiquement vers la zone à surveiller (20) sur une unité optique (30) qui tourne en continu autour d'un axe de rotation (34), dans lequel un signal de réception est généré à partir de la lumière réémise par les objets dans la zone à surveiller (20) et déviée périodiquement sur l'unité optique (30) vers un récepteur de lumière (28), signal à partir duquel des informations relatives aux objets dans la zone à surveiller (20) sont acquises,
dans lequel l'unité optique (30) comprend deux guides de lumière (14, 26) tournant conjointement que sont un guide de lumière d'émission (14) et un guide de lumière de réception (26), et le rayon lumineux d'émission (18) dans le guide de lumière d'émission (14) est dévié vers la zone à surveiller (20) par l'émetteur de lumière (12) et la lumière réémise (22) dans le guide de lumière de réception (26) est déviée depuis la zone à surveiller (20) vers le récepteur de lumière (28), **caractérisé en ce qu'**il n'y a pas de déviation entre une zone de sortie du guide de lumière d'émission (14) et la zone à surveiller (20) ainsi qu'entre la zone à surveiller (20) et une zone d'entrée du guide de lumière de réception (26), et les guides de lumière (14, 26) tournant conjointement remplissent donc eux-mêmes la fonction de l'unité de déviation et remplacent un miroir rotatif.

15. Procédé selon la revendication 14,
dans lequel l'émetteur de lumière (12) émet le rayon lumineux d'émission (18) sur l'axe de rotation (34), le guide de lumière d'émission (14) dévie le rayon lumineux d'émission (18) de 60° à 90°, en particulier d'environ 90° vers la zone à surveiller (20), et le guide de lumière de réception (26) dévie la lumière réémise (22) depuis la zone à surveiller (20) de 60° à 90°, en particulier d'environ 90° sur l'axe de rotation (34) vers le récepteur de lumière (28).
